(19) Europäisches Patentamt
European Patent Office
Office européen des brevets

(11) EP 0 849 217 B1

(12) FASCICULE DE BREVET EUROPEEN

(45) Date de publication et mention de la délivrance du brevet:
**11.10.2000 Bulletin 2000/41**

(51) Int Cl.[7]: **C01B 17/05**

(21) Numéro de dépôt: **97402944.9**

(22) Date de dépôt: **05.12.1997**

# (54) Procédé et dispositif d'épuration d'un gaz contenant de l'hydrogène sulfuré et du dioxyde de soufre

Verfahren und Vorrichtung zur Reinigung eines Schwefelwasserstoff und Schwefeldioxyd enthaltenden Gases

Process and apparatus for purifying a gas containing hydrogen sulfide and sulfur dioxide

(84) Etats contractants désignés:
**DE ES GB IT NL**

(30) Priorité: **12.12.1996 FR 9615474**

(43) Date de publication de la demande:
**24.06.1998 Bulletin 1998/26**

(73) Titulaire: **INSTITUT FRANCAIS DU PETROLE**
**92852 Rueil-Malmaison Cedex (FR)**

(72) Inventeurs:
- **Boucot, Pierre**
**69360 Ternay (FR)**
- **Viltard, Jean-Charles**
**26000 Valence (FR)**

(56) Documents cités:
**FR-A- 2 216 223** **FR-A- 2 338 738**
**FR-A- 2 532 190**

- **DATABASE WPI Section Ch, Week 7929 Derwent Publications Ltd., London, GB; Class A25, AN 79-53653B XP002040500 & JP 54 072 762 A (NIPPON OILS & FATS CO LTD) , 11 juin 1979**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

L'invention concerne un procédé et un dispositif d'épuration d'un gaz contenant de l'hydrogène sulfuré et du dioxyde de soufre.

L'hydrogène sulfuré ($H_2S$) contenu dans divers mélanges gazeux en provenance des raffineries ou contenus dans le gaz naturel doit être éliminé le plus complètement possible par récupération de soufre de manière à pouvoir rejeter dans l'atmosphère un gaz conforme aux normes fixées par les divers pays industrialisés. Si dans un passé encore proche ces normes étaient relativement faciles à atteindre car relativement peu sévères, il n'en est plus de même aujourd'hui et notamment dans des pays comme les États-Unis ou certains états de ce pays et il n'est plus possible de rejeter dans l'atmosphère un mélange gazeux contenant plus de 500 parties en poids par million (ppm) de dioxyde de soufre et d'hydrogène sulfuré.

Dès 1970 l'Institut Français du Pétrole a mis au point un procédé d'élimination de l'hydrogène sulfuré sous forme de soufre élémentaire utilisant la réaction de Claus dans des conditions particulièrement attractives quant à la facilité de la mise en oeuvre et au coût relativement faible du procédé. Ce procédé connu sous le nom commercial de Claupol 1500 utilise la catalyse homogène au sein d'un solvant pour transformer à une température inférieure à 160 °C l'hydrogène sulfuré par réaction avec le dioxyde de soufre ($SO_2$) en soufre élémentaire. Il permet après traitement du gaz acide contenant de l'hydrogène sulfuré dans une unité classique Claus d'obtenir un rendement global en soufre de plus de 98 %. Ce procédé est utilisé industriellement dans plus de 30 unités implantées dans divers pays du monde dont les États-Unis.

Le procédé initial mis au point dans les années 70 a récemment été amélioré au début des années 90 et permet actuellement d'obtenir un rendement en soufre de l'ordre de 99,5 %. Le procédé initial est par exemple décrit dans l'article de Y. Barthel et col. publié en 1974 dans le n° 136 de la revue Informations Chimie pages 235 à 238 et dans Pétrole et Technique n° 383, Octobre 1993, pages 24 à 39. Quant au procédé amélioré désigné habituellement sous le nom commercial CLAUSPOL 300 il est par exemple décrit dans la Revue de l'Institut Français du Pétrole vol 49 n° 5 Septembre-Octobre 1994 pages 491-493.

Ces deux procédés utilisent une phase liquide constituée essentiellement de glycol que l'on fait circuler à contre-courant du mélange gazeux à épurer contenant du sulfure d'hydrogène et du dioxyde de soufre dans un rapport voisin de 2. Ces procédés utilisent un catalyseur dissous dans le glycol, choisi parmi les carboxylates de métaux alcalin ou alcalino terreux.

L'arrière plan technologique est par ailleurs illustré dans les brevets suivants : FR-A-2 216 223, FR-A-2 532 190, FR-A- 2 338 738 et JP-A-54 072 762 (Database WPI, Section Ch, Week 7929, Derwent Publications Ltd., London, GB; AN 79-53653 B).

La présente invention concerne le traitement d'un mélange gazeux renfermant du dioxyde de soufre et de l'hydrogène sulfuré. C'est ainsi que les mélanges pouvant être traités à l'aide du procédé de la présente invention peuvent être les gaz rejetés par les usines de fabrication d'acide sulfurique, par les installations de combustion utilisant des combustibles contenant du soufre et ceux provenant de la transformation en soufre élémentaire de l'hydrogène sulfuré selon le procédé CLAUS. Dans tous les cas, le mélange gazeux que l'on va traiter dans le procédé selon la présente invention contiendra outre du dioxyde de soufre, de l'hydrogène sulfuré, de préférence en une quantité voisine de la quantité stoechiométrique de la réaction de CLAUS soit deux moles d'hydrogène sulfuré pour une mole de dioxyde de soufre. Si le mélange à traiter ne contient pas ou peu d'hydrogène sulfuré, il sera alors judicieux d'en ajouter avant de l'introduire dans le réacteur de traitement selon le procédé de la présente invention. Si le mélange à traiter contient trop d'hydrogène sulfuré, une partie de celui-ci pourra par exemple être transformé en dioxyde de soufre par oxydation de manière à obtenir un ratio convenable entre les deux composés.

On a découvert de façon surprenante qu'il est possible d'améliorer encore le procédé de récupération du soufre à partir d'un mélange gazeux contenant de l'hydrogène sulfuré et du dioxyde de soufre, par réaction de ces deux composés l'un sur l'autre au sein d'un milieu réactionnel liquide comprenant un solvant de ces deux composés, de préférence un solvant du type glycol, par mise en contact à co-courant du mélange gazeux contenant du dioxyde de soufre et de l'hydrogène sulfuré en présence d'au moins un composé basique soluble dans le solvant utilisé.

Dans une forme préférée de réalisation, le milieu réactionnel liquide contiendra à l'état dissous au moins un carboxylate de métal alcalin ou de métal alcalino terreux mais il est également possible d'utiliser d'autres composés basiques comme par exemple de l'ammoniac.

Il est préférable que la quantité d'hydrogène sulfuré contenu dans le milieu liquide, dans lequel la formation de soufre élémentaire s'effectue par réaction avec le dioxyde de soufre soit d'environ 1,5 à environ 2,5 moles et avantageusement d'environ 1,9 à environ 2,1 moles d'hydrogène sulfuré par mole de dioxyde de soufre.

La présente invention s'applique particulièrement bien au traitement des gaz de queues du procédé CLAUS qui contiennent encore de faible quantité d'hydrogène sulfuré et de dioxyde de soufre. Dans ce cas, on prélève habituellement une petite partie de l'hydrogène sulfuré normalement introduit à l'entrée du réacteur CLAUS sans modifier la quantité d'air injecté. De cette manière, les gaz rejetés par l'installation CLAUS renferment $H_2S$ et $SO_2$ dans un rapport molaire $H_2S$ / $SO_2$ un peu inférieur à 2. Ce rapport est alors ajusté de manière à obtenir un rapport voisin de 2 au sein du solvant par addition dans le mélange gazeux d'une quantité adéquate de l'hydrogène sulfuré prélevé à l'entrée de l'unité CLAUS .

Une autre manière d'opérer consiste à choisir un rapport air/ $H_2S$ introduit dans l'unité CLAUS permettant d'obtenir un gaz de queue contenant une proportion d'hydrogène sulfuré et de dioxyde de soufre telle que le rapport $H_2S$ / $SO_2$ soit voisin de 2.

Dans le procédé de la présente invention les solvants utilisables sont ceux capables de dissoudre $H_2S$ et $SO_2$ et qui sont stables à la température choisie pour la réaction de formation du soufre élémentaire. Ces solvants sont par exemple ceux mentionnés dans les documents de brevets français au nom de la demanderesse FR-A-2123778 et FR-B-1601098. On préfère habituellement employer un glycol tel que par exemple l'éthylène glycol, le propylène glycol, un polyéthylène glycol liquide et un polypropylène glycol liquide. On utilisera avantageusement un polyéthylène glycol de poids moléculaire moyen de l'ordre de 400.

Le composé basique dissous dans le solvant que l'on emploie peut être l'un de ceux mentionnés dans les documents de brevets cités ci-devant ou l'un de ceux mentionnés dans le brevet US-A-3598529. On utilisera avantageusement au moins un sel alcalin ou alcalino-terreux d'un acide carboxylique et de préférence au moins un sel alcalin d'un acide carboxylique comprenant un noyau aromatique dans sa formule. On utilisera ainsi par exemple un sel alcalin de l'acide benzoïque et/ou un sel alcalin de l'acide salicylique. On utilise souvent un sel de sodium de l'acide salicylique soit en l'introduisant sous forme de sel dans le solvant, soit en introduisant l'acide salicylique et une solution aqueuse de soude en quantité suffisante dans le solvant.

L'invention concerne aussi le dispositif pour la mise en oeuvre du procédé. Plus précisément, il comprend au moins un réacteur 2 sensiblement vertical contenant au moins un garnissage 2a, ledit réacteur comportant à proximité de son extrémité supérieure, au dessus dudit garnissage, au moins un moyen d'introduction d'un mélange gazeux 3 contenant de l'hydrogène sulfuré et du dioxyde de soufre, en dessous dudit garnissage au moins un moyen d'évacuation 7 d'un mélange gazeux résiduel et au moins un moyen de soutirage 1 d'un milieu réactionnel liquide, au moins un moyen de séparation 9, 13 et de récupération de soufre liquide et au moins un moyen de recyclage 4, 14 du milieu réactionnel liquide à proximité de son extrémité supérieure au dessus dudit garnissage connecté au moyen de soutirage 1, l'appareillage comportant en outre au moins un moyen 10 d'échange indirect de chaleur connecté au moyen 4, 14 de recyclage du milieu réactionnel liquide.

Les exemples suivants illustrent l'invention sans en limiter la portée.

La figure 1 schématise l'unité pilote utilisée pour former le soufre élémentaire par réaction entre $H_2S$ et $SO_2$ dans le cas de la mise en contact de ces gaz à co-courant de la circulation de la solution catalytique.

La figure 2 schématise l'unité pilote utilisée pour former le soufre élémentaire par réaction entre $H_2S$ et $SO_2$ dans le cas de la mise en contact de ces gaz à contre-courant de la circulation de la solution catalytique.

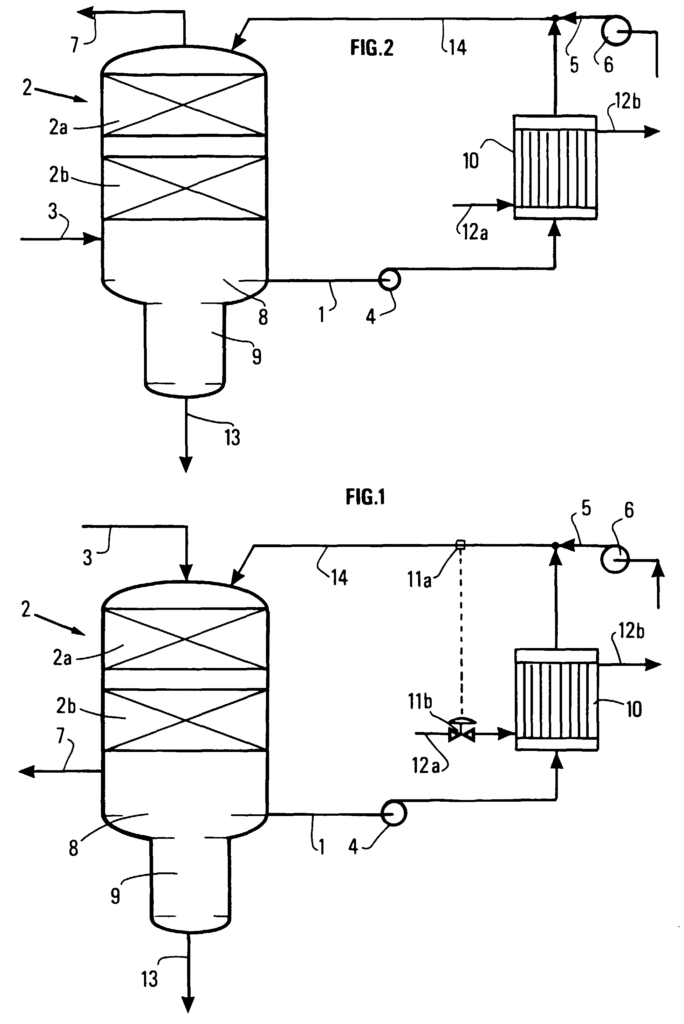

Exemple 1 (figure 1) selon l'invention

On introduit un gaz d'unité Claus, dont le débit est de 280 $m^3$/h et qui contient en volume 1,375 % de $H_2S$, 0,66 % de $SO_2$, 35,49 % de $H_2O$ et 62,51 % de $N_2$ dans un réacteur-contacteur constitué d'une colonne 2 contenant deux lits de garnissage 2a et 2b. Ce gaz est introduit par une ligne 3 en tête de réacteur et on le met en contact à 125 °C à co-courant avec un solvant organique introduit en tête de réacteur par une ligne 14 et une pompe 4. Le solvant est recyclé entre le bas et le haut du réacteur par ladite ligne et ladite pompe à un débit de 20 $m^3$/h à travers un échangeur de chaleur 10 contrôlé et régulé en température par un système de mesure contrôle 11a et 11b permettant d'injecter de l'eau chaude par la ligne 12a et de l'évacuer par la ligne 12b. La température du solvant recyclé est de 123 °C.

Le solvant organique utilisé est un polyéthylène glycol de masse moléculaire 400. Le catalyseur soluble, injecté en continu dans le solvant, est constitué d'une solution aqueuse de salicylate de sodium à une concentration de 3 % poids, de soude à une concentration de 6,6 % poids et d'eau à une concentration de 90,4 % poids. Il est injecté dans la ligne de recirculation 1 grâce à la ligne 5 et à la pompe 6. Le débit d'injection moyen de catalyseur et d'eau pour maintenir le débit désiré en catalyseur dans le solvant est de 0,2 l/h.

Le garnissage utilisé dans l'exemple est constitué de deux lits de selles "Intalox" en céramique de surface spécifique de 250 $m^2/m^3$ et ayant la propriété de retenir les faibles quantités de sels de sodium formés lors de la réaction.

Le gaz traité sort en fond du réacteur par la ligne 7 et est envoyé vers un incinérateur.

Le soufre produit dans le réacteur suivant la réaction :

$$2\,H_2S + SO_2 \rightleftarrows 3\,S + 2\,H_2O$$

est séparé dans la zone 9 qui renferme un moyen de chauffage, tandis que le solvant saturé en soufre à la température du réacteur dans la zone 8, est recyclé en tête du réacteur par la pompe 4.

On soutire le soufre liquide formé par la ligne 13 en fond de réacteur.

On mesure les quantités de $H_2S$ et de $SO_2$ à l'entrée ligne 3 et à la sortie ligne 7 du réacteur afin de calculer le rendement de réaction selon la formule suivante :

$$\frac{\text{\% composés soufrés entrée - \% composés soufrés sortie) x 100}}{\text{(\% composés soufrés entrée)}}$$

A l'entrée du réacteur, le rapport molaire $H_2S$ /$SO_2$ est de 2,07. Le rendement en soufre est de 96,7 %. La teneur résiduelle dans le gaz récupéré par la ligne 7 en $SO_2$ et $H_2S$ exprimée en soufre est de 671 ppm.

Exemple 2 figure 2 (comparatif)

On reprend l'exemple 1 dans les mêmes conditions opératoires avec les mêmes références de figure mais la mise en contact du gaz d'unité Claus avec le solvant et le catalyseur s'effectue à contre courant. Pour cela, le gaz est introduit en fond de réacteur par la ligne 3 et le gaz épuré est recueilli en tête de réacteur. Le rendement en soufre est de 96 %. La teneur résiduelle dans le gaz épuré en $SO_2$ et $H_2S$ exprimée en soufre est de 810 ppm.

## Revendications

1. Procédé de fabrication de soufre élémentaire par réaction d'hydrogène sulfuré et de dioxyde de soufre au sein d'un milieu réactionnel liquide comprenant un solvant de ces deux composés, par mise en contact d'un mélange gazeux contenant du dioxyde de soufre et de l'hydrogène sulfuré en présence d'au moins un composé basique soluble dans le solvant, caractérisé en ce que la mise en contact est effectuée à co-courant de gaz et de liquide.

2. Procédé selon la revendication dans lequel le mélange gazeux mis en contact avec le solvant contient de l'hydrogène sulfuré et du dioxyde de soufre dans un rapport molaire d'environ 1,5 à environ 2,5 mole d'hydrogène sulfuré par mole de dioxyde de soufre.

3. Procédé selon la revendication 1 ou 2 dans lequel le mélange gazeux mis en contact avec le solvant contient de l'hydrogène sulfuré et du dioxyde de soufre dans un rapport molaire d'environ 1,9 à environ 2,1 mole d'hydrogène sulfuré par mole de dioxyde de soufre.

4. Procédé selon l'une des revendications 1 à 3 dans lequel le solvant utilisé est choisi dans le groupe formé par l'éthylène glycol, le propylène glycol, un polyéthylène glycol liquide et un polypropylène glycol liquide.

5. Procédé selon l'une des revendications 1 à 4 dans lequel le composé basique utilisé est choisi dans le groupe formé par un sel alcalin et un sel alcalinoterreux des acides carboxyliques.

6. Procédé selon l'une des revendications 1 à 5 dans lequel le composé basique utilisé est choisi dans le groupe formé par un sel alcalin de l'acide benzoïque et un sel alcalin de l'acide salicylique.

7. Appareillage pour la mise en oeuvre du procédé de fabrication de soufre élémentaire par réaction d'hydrogène sulfuré et de dioxyde de soufre au sein d'un milieu réactionnel liquide selon l'une des revendications 1 à 6 comportant au moins un réacteur (2) sensiblement vertical contenant au moins un garnissage (2a), ledit réacteur comportant à proximité de son extrémité supérieure, au dessus dudit garnissage, au moins un moyen d'introduction (3) d'un mélange gazeux contenant de l'hydrogène sulfuré et du dioxyde de soufre, en dessous dudit garnissage au moins un moyen d'évacuation (7) d'un mélange gazeux résiduel et au moins un moyen de soutirage (1) d'un milieu réactionnel liquide, au moins un moyen de séparation (9, 13) et de récupération de soufre liquide et au moins un moyen de recyclage (4, 14) du milieu réactionnel liquide à proximité de son extrémité supérieure au dessus dudit garnissage connecté au moyen de soutirage (1), l'appareillage comportant en outre au moins un moyen (10) d'échange indirect de chaleur connecté au moyen (4, 14) de recyclage du milieu réactionnel liquide.

8. Appareillage selon la revendication 7 caractérisé en ce qu'il comporte au moins un moyen de chauffage du moyen de séparation et de récupération (9, 13) du soufre liquide.

## Claims

1. A process for the production of elemental sulphur by reacting hydrogen sulphide and sulphur dioxide in a liquid reaction medium comprising a solvent for the two compounds, by bringing a gas mixture containing sulphur dioxide and hydrogen sulphide into the presence of at least one basic compound which is soluble in the solvent, characterized in that the gas and liquid are brought into contact in co-current mode.

2. A process according to claim 1, in which the gas mixture brought into contact with the solvent contains hydrogen sulphide and sulphur dioxide in a molar ratio of about 1.5 to about 2.5 moles of hydrogen sulphide per mole of sulphur dioxide.

3. A process according to claim 1 or claim 2, in which the gas mixture brought into contact with the solvent contains hydrogen sulphide and sulphur dioxide in a molar ratio of about 1.9 to about 2.1 moles of hydrogen sulphide per mole of sulphur dioxide.

**4.** A process according to any one of claims 1 to 3, in which the solvent used is selected from the group formed by ethylene glycol, propylene glycol, a liquid polyethylene glycol and a liquid polypropylene glycol.

**5.** A process according to any one of claims 1 to 4, in which the basic compound used is selected from the group formed by an alkaline salt and an alkaline-earth salt of carboxylic acids.

**6.** A process according to any one of claims 1 to 5, in which the basic compound used is selected from the group formed by an alkaline salt of benzoic acid and an alkaline salt of salicylic acid.

**7.** An apparatus for carrying out the process for the production of elemental sulphur by reacting hydrogen sulphide with sulphur dioxide in a liquid reaction medium in accordance with any one of claims 1 to 6, comprising at least one substantially vertical reactor (2) containing at least one packing (2a), said reactor comprising, proximate its upper end above the packing, at least one means (3) for introducing a gas mixture containing hydrogen sulphide and sulphur dioxide, and located below the packing, at least one means (7) for evacuating a residual gas mixture and at least one means (1) for withdrawing a liquid reaction medium, and at least one means (9), (13) for separating and recovering liquid sulphur, and at least one means (4), (14) for recycling liquid reaction medium to proximate its upper end above said packing connected to the withdrawing means (1), the apparatus further comprising at least one means (10 for indirect heat exchange connected to the means (4), (14) for recycling the liquid reaction medium.

**8.** An apparatus according to claim 7, characterized in that it comprises at least one means for heating the means (9), (13) for separating and recovering liquid sulphur.

**Patentansprüche**

**1.** Verfahren zur Herstellung elementaren Schwefels durch Reaktion von Schwefelwasserstoff und Schwefeldioxid in einem flüssigen Reaktionsmedium, das ein Lösungsmittel dieser beiden Verbindungen umfasst, durch Kontaktieren eines gasförmigen, Schwefeldioxid und Schwefelwasserstoff enthaltenden Gemisches, in Anwesenheit wenigstens einer basischen in diesem Lösungsmittel löslichen Zusammensetzung, dadurch gekennzeichnet, dass die Kontaktierung im Gleichstrom von Gas und Flüssigkeit durchgeführt wird.

**2.** Verfahren nach Anspruch 1, in dem das gasförmige mit dem Lösungsmittel kontaktierte Gemisch Schwefelwasserstoff und Schwefeldioxid in einem Mol-Verhältnis von etwa 1,5 bis etwa 2,5 Mol Schwefelwasserstoff zu Mol Schwefeldioxid enthält.

**3.** Verfahren nach einem der Ansprüche 1 oder 2, bei dem das gasförmige mit dem Lösungsmittel kontaktierte Gemisch Schwefelwasserstoff und Schwefeldioxid in einem Mol-Verhältnis von etwa 1,9 bis etwa 2,1 Mol Schwefelwasserstoff pro Mol Schwefeldioxid enthält.

**4.** Verfahren nach einem der Ansprüche 1 bis 3, bei dem das verwendete Lösungsmittel gewählt ist aus der durch Äthylenglykol, Propylenglykol, ein flüssiges Polyäthylenglykol und ein flüssiges Polypropylenglykol gebildeten Gruppe.

**5.** Verfahren nach einem der Ansprüche 1 bis 4, bei dem die verwendete basische Zusammensetzung gewählt ist aus der durch ein Alkalisalz und ein Erdalkalisalz der Carboxylsäuren gebildeten Gruppe.

**6.** Verfahren nach einem der Ansprüche 1 bis 5, bei dem die verwendete basische Zusammensetzung gewählt ist aus der durch ein Alkalisalz der Benzoësäure und ein Alkalisalz der Salicylsäure gebildeten Gruppe.

**7.** Vorrichtung zur Durchführung des Herstellungsverfahrens für elementaren Schwefel durch Reaktion von Schwefelwasserstoff und Schwefeldioxid in einem flüssigen Reaktionsmedium nach einem der Ansprüche 1 bis 6, wenigstens einen Reaktor (2) umfassend, der im wesentlichen vertikal ist und wenigstens eine Auskleidung (2a) enthält, wobei der Reaktor benachbart seinem oberen Ende oberhalb dieser Auskleidung wenigstens ein Einführungsmittel (3) für ein gasförmiges Schwefelwasserstoff und Schwefeldioxid enthaltendes Gemisch und unterhalb dieser Auskleidung wenigstens ein Abzugsmittel (7) für ein gasförmiges Restgemisch und wenigstens ein Abzugsmittel (1) für ein flüssiges Reaktionsgemisch umfasst und wobei wenigstens ein Trennmittel (9, 13) und ein Rückgewinnungsmittel für flüssigen Schwefel und wenigstens ein Rezyklierungsmittel (4, 14) für das flüssige Reaktionsmedium benachbart seinem oberen Ende oberhalb dieser mit dem Abzugsmittel (1) verbundenen Auskleidung umfasst, und die Vorrichtung im Übrigen wenigstens ein Mittel (10) zum indirekten Wärmeaustausch aufweist, das mit dem Mittel (4, 14) zur Rezyklierung des flüssigen Reaktionsmediums verbunden ist.

8. Verfahren nach Anspruch 7, dadurch gekennzeichnet, dass sie wenigstens ein Mittel zur Erwärmung des Trenn- und Rückgewinnungsmittels (9, 13) für den flüssigen Schwefel umfasst.

FIG.2
7
14
5
6
2
2a
12b
10
2b
3
12a
8
1
4
9
13
FIG.1
5
6
3
14
11a
2
12b
2a
11b
2b
10
7
12 a
8
1
4
9
13